# EUROPEAN PATENT APPLICATION

(11) **EP 2 276 203 A1**
(43) Date of publication of application: **19.01.2011**
(21) Application number: 09757071.7
(22) Date of filing: 01.06.2009
(51) Int. Cl.: H04L 12/28

(54) **METHOD AND DEVICE FOR CONJUNCTION OF DEVICE AND GATEWAY**

(30) Priority: 06.06.2008 CN 200810111117
(71) Applicant: Huawei Technologies Co., Ltd., Longgang District, Shenzhen Guangdong 518129 (CN)
(72) Inventor: WU, Huangwei, Longgang District 518129 Shenzhen (CN); FANG, Ping, Longgang District 518129 Shenzhen (CN); ZHANG, Qinliang, Longgang District 518129 Shenzhen (CN)
(74) Representative: Kreuz, Georg Maria
(86) International application number: PCT/CN2009/072058
(87) International publication number: WO 2009/146637

(57) **Abstract**

A method and a device for association between an equipment and a gateway are provided. The method includes: acquiring information of a user equipment (UE); establishing a virtual equipment according to the information of the UE; and configuring an identification of the gateway into the virtual equipment. A gateway is further provided, including: an acquiring module, adapted to acquire information of a UE; an establishing module, adapted to establish a virtual equipment according to the information of the UE acquired by the acquiring module; and a configuration module, adapted to configure an identification of the gateway into the virtual equipment established by the establishing module. Through the method, a configuration management system is enabled to acquire the association relation between the virtual equipment and the gateway.

## Description

The present application claims the benefit of priority to China Chinese Patent Application No. 200810111117.1, filed on June 6, 2008, and entitled "METHOD AND DEVICE FOR ASSOCIATION BETWEEN EQUIPMENT AND GATEWAY", which is incorporated herein by reference in its entirety.

### FIELD OF THE TECHNOLOGY

The present invention relates to the field of communications technologies, and more particularly, to a method and a device for association between an equipment and a gateway.

### BACKGROUND OF THE INVENTION

In order to cut down the management costs for equipments in a home network, it is a good choice for an operator to conduct remote management through the Technical Report 069 (TR-069) protocol of the Digital Subscriber Line (DSL) Forum over the equipments in the home network. For the access equipments in the home network, such as a gateway, it is generally required that they support the TR-069 protocol, and remote management can be directly implemented through the TR-069 protocol. For other equipments in the home network, remote management is also needed, but these equipments do not support the TR-069 protocol, and the equipment that does not support the TR-069 protocol is called a user equipment (UE). The UE may be an Ethernet-WiFi adapter, an Ethernet-power line adapter, a set-top box, or the like.

The remote management over the UE in the home network may be implemented by using a gateway as an agent, that is, a remote configuration management system sends a management command over the UE to the gateway through the TR-069 protocol, and the gateway converts the command of the TR-069 protocol into a command of a protocol between the gateway and the UE and sends the protocol to the UE.

Using the gateway as the agent may be implemented by using a virtual equipment, that is, a virtual equipment is added on the gateway to represent the UE, and the virtual equipment supports the TR-069 protocol. For the configuration management system, the virtual equipment is equivalent to a real equipment that supports the TR-069 protocol, and the configuration management system achieves management over the UE by managing the virtual equipment.

However, the prior art has the following problems.

The configuration management system can neither acquire the association relation between the virtual equipment and the gateway, nor figure out the specific gateway that the UE corresponding to the virtual equipment is connected to.

### SUMMARY OF THE INVENTION

The present invention is directed to a method and a device for association between an equipment and a gateway, so that a configuration management system is enabled to acquire the association relation between a virtual equipment and the gateway.

To achieve the above objective, as its first aspect the present invention provides a method for association between an equipment and a gateway, which includes the following steps.

Information of a UE is acquired.

A virtual equipment is established according to the information of the UE.

An identification of the gateway is configured into the virtual equipment.

As its second aspect the present invention provides a gateway, which includes an acquiring module, an establishing module, and a configuration module.

The acquiring module is adapted to acquire information of a UE.

The establishing module is adapted to establish a virtual equipment according to the information of the UE acquired by the acquiring module.

The configuration module is adapted to configure an identification of the gateway into the virtual equipment established by the establishing module.

As its third aspect the present invention provides a system, which includes a configuration management system, a UE, and a gateway. The gateway includes an acquiring module, an establishing module, and a configuration module.

The acquiring module is adapted to acquire information of the UE.

The establishing module is adapted to establish a virtual equipment according to the information of the UE acquired by the acquiring module.

The configuration module is adapted to configure an identification of the gateway into the virtual equipment established by the establishing module.

As its fourth aspect the present invention provides a method for managing a UE, which includes the following steps.

A virtual equipment sends a notification message carrying an identification of the virtual equipment and an identification of the gateway to a configuration management system, where the virtual equipment is established by the gateway according to information of the UE, and is configured with the identification of the gateway

The configuration management system manages the UE according to the identification of the gateway.

As its fifth aspect the present invention provides an auxiliary device for managing a UE, where the auxiliary device includes a storage module, a sending module, and an information conversion module.

The storage module is adapted to store corresponding information of the UE and an identification of a gateway, where the information of the UE includes corresponding functions of the UE and an identification of the UE.

The sending module is adapted to send the identification of the UE and the identification of the gateway to the configuration management system.

The information conversion module is adapted to receive a management command over the corresponding UE sent by the configuration management system, convert the received management command into a management command identifiable to the UE, and send the converted management command to the UE.

Compared with the prior art, the technical solutions of the present invention have the following advantages.

By acquiring the information of the UE, establishing the virtual equipment according to the information of the UE, and configuring the identification of the gateway into the virtual equipment, the configuration management system is enabled to acquire the association relation between the UE and the gateway according to the information reported by the virtual equipment, thereby achieving unified management over the UE and the gateway.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly below. Apparently, the accompanying drawings in the following description are only some embodiments of the present invention, and persons of ordinary skill in the art can derive other drawings from the accompanying drawings without creative efforts.
FIG. 1 is a schematic view of an application scenario according to an embodiment of the present invention;
FIG. 2 is a flow chart of a method for association between an equipment and a gateway according to an embodiment of the present invention;
FIG. 3 is a flow chart of a method for association between an equipment and a gateway according to another embodiment of the present invention;
FIG. 4 is a schematic structural view of a gateway according to an embodiment of the present invention;
FIG. 5 is a schematic view of a system device according to an embodiment of the present invention;
FIG. 6 is a flow chart of a method for managing a UE according to an embodiment of the present invention; and
FIG. 7 is a schematic structural view of an auxiliary device for managing a UE according to an embodiment of the present invention.

### DETAILED DESCRIPTION OF THE EMBODIMENTS

The technical solutions of the present invention will be clearly described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

In an embodiment, the present invention provides a method for association between an equipment and a gateway, so that a configuration management system is enabled to acquire the association relation between a virtual equipment and the gateway.

The specific implementation of the present invention is described in further detail below with reference to the embodiments and the accompanying drawings.

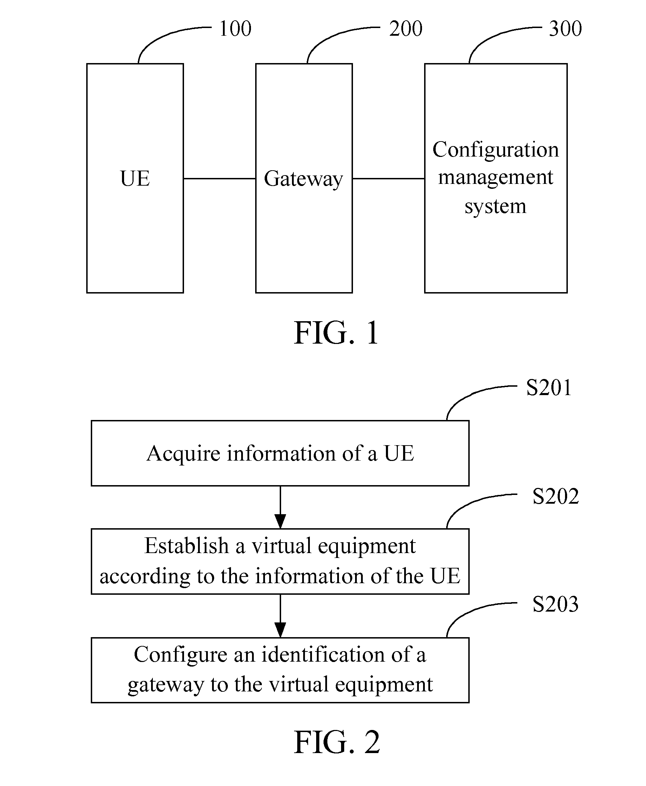

FIG. 1 is a schematic view of an application scenario according to an embodiment of the present invention, which specifically includes a UE 100, a gateway 200, and a configuration management system 300.

The UE 100 is directly or indirectly connected to the gateway, and managed by the configuration management system through the gateway. The UE may be an Ethernet-WiFi adapter, an Ethernet-power line adapter, a power line-WiFi adapter, or a set-top box.

The gateway 200, capable of providing an Internet access service, is configured and managed by the configuration management system, and also acts as an agent, so that the configuration management system is enabled to implement management over the UE through the gateway.

The configuration management system 300 is capable of implementing remote configuration and management over equipments (including the gateway and the UE) in the network, and may be an Auto-Configuration Server (ACS).

In an embodiment, the present invention provides a method for association between an equipment and a gateway. As shown in FIG. 2, the method includes the following steps.

In step S201, information of the UE is acquired.

Specifically, the gateway may acquire the information of the UE through a Universal Plug and Play (UPnP) protocol or a Dynamic Host Configuration Protocol (DHCP), and may also configure the information of the UE into the gateway, where the information of the UE includes an identification of the UE and functions of the UE.

In step S202, a virtual equipment is established according to the information of the UE.

Specifically, the gateway establishes the virtual equipment with a data model corresponding to the UE according to the acquired information of the UE, and maps the functions supported by the UE to the data model of the virtual equipment, and at the same time the virtual equipment records an identification of the virtual equipment during establishment. The identification of the virtual equipment refers to the converted identification that is obtained by converting the identification of the UE in the information of the UE into a format of the identification in the TR-069, and stored in a newly added record of a management equipment table of the gateway.

In step S203, an identification of the gateway is configured into the virtual equipment.

Specifically, after the gateway establishes the virtual equipment, the identification of the gateway is configured into the data model of the virtual equipment, where the format of the identification of the gateway is the same as that of the identification of the virtual equipment.

In the above steps, the association relation between the virtual equipment and the gateway can be acquired by recording the identification of the gateway in the virtual equipment established according to the information of the UE.

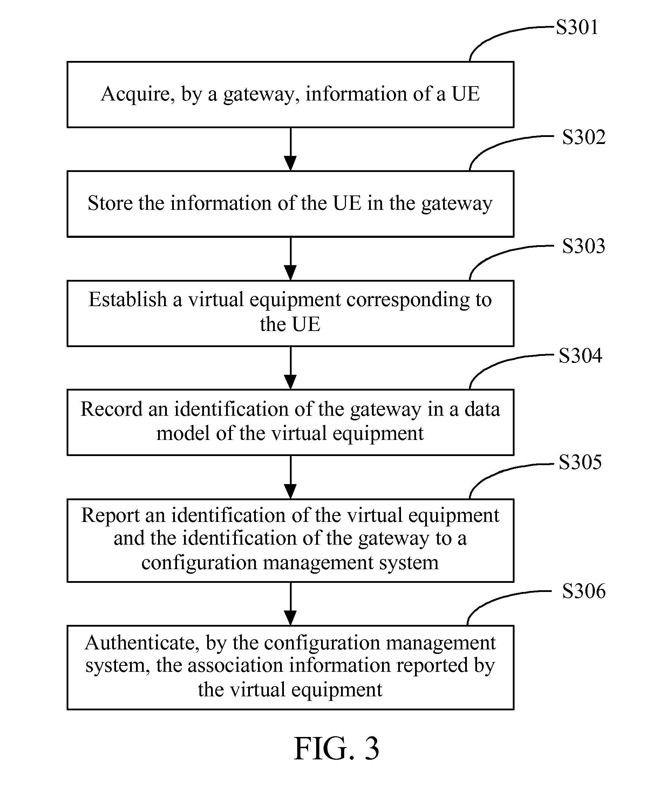

In another embodiment, the present invention gives detailed descriptions of a method for association between a virtual equipment and a gateway. As shown in FIG. 3, the method includes the following steps.

In step S301, the gateway acquires information of a UE.

Specifically, the gateway may interact with the UE through the UPnP protocol in the prior art, where the gateway is a control point of the UPnP, so as to acquire the information of the UE, including an identification of the UE and functions of the UE. In the UPnP protocol, the identification of the UE is a Universally Unique Identifier (UUID). The gateway may also acquire the information of the UE or configure the information of the UE into the gateway through the DHCP or other protocols.

In step S302, the information of the UE is stored in the gateway. Specifically, the identification of the UE and the functions of the UE are both stored in the gateway, or only the identification of the UE is stored in the gateway.

In step S303, the virtual equipment corresponding to the UE is established.

Specifically, firstly, the identification acquired from the UE needs to be converted into the format of the identification in the TR-069. The structure of the identification in the TR-069 is shown in Table 1, and the conversion method is as follows. The UUID is used as a product serial number, a manufacturer organizationally unique identifier (OUI) of the gateway serves as a manufacturer OUI of the equipment, and the product class is set to empty. Next, a record unit is added in the management equipment table of the gateway, and is adapted to record the converted identification of the UE, through which the UEs that have established connections with the gateway can be acquired.

**Table 1 Structure of identification in TR-069**

| **Parameter** | **Object** | **Description** |
|---|---|---|
| Manufacturer OUI | 6-byte string | Unique identifier of the manufacturer |
| Serial Number | 64-byte string | Serial number of the product |
| Product Class | 64-byte string | Type of the equipment |

Afterwards, the gateway establishes the virtual equipment with a data model corresponding to the UE according to the acquired information of the UE, and maps the functions supported by the UE to the data model of the virtual equipment, and at the same time the virtual equipment records the converted identification of the UE during establishment, where the identification may be referred to as the identification of the virtual equipment. The virtual equipment represents the UE to establish connection with the configuration management system independently, is managed by the configuration management system independently, and is capable of converting a command of the configuration management system into a command identifiable to the UE.

In step S304, the identification of the gateway is recorded in the data model of the virtual equipment.

Specifically, after the gateway establishes the virtual equipment, the identification of the gateway is configured into the data model of the virtual equipment, and in this manner, the gateway that is connected to the virtual equipment can be acquired by searching the data model, where the format of the identification of the gateway is the same as that of the identification of the virtual equipment.

In step S305, the identification of the virtual equipment and the identification of the gateway are reported to the configuration management system.

Specifically, the virtual equipment reports the identification of the virtual equipment and the identification of the gateway in the data model to the configuration management system, and may report through a TR-069 Inform method. The configuration management system may acquire the gateway connected to the virtual equipment according to the identification of the gateway reported by the virtual equipment.

In step S306, the configuration management system authenticates the association information reported by the virtual equipment.

Specifically, the configuration management system queries the management equipment table of the corresponding gateway according to the identification of the gateway, so as to acquire the identification of the UE and further acquire the UEs that are connected to the gateway.

By comparing the consistency between the identification of the virtual equipment reported by the virtual equipment and the identification of the UE queried from the gateway, the correctness of the association between the virtual equipment and the gateway reported by the virtual equipment can be checked.

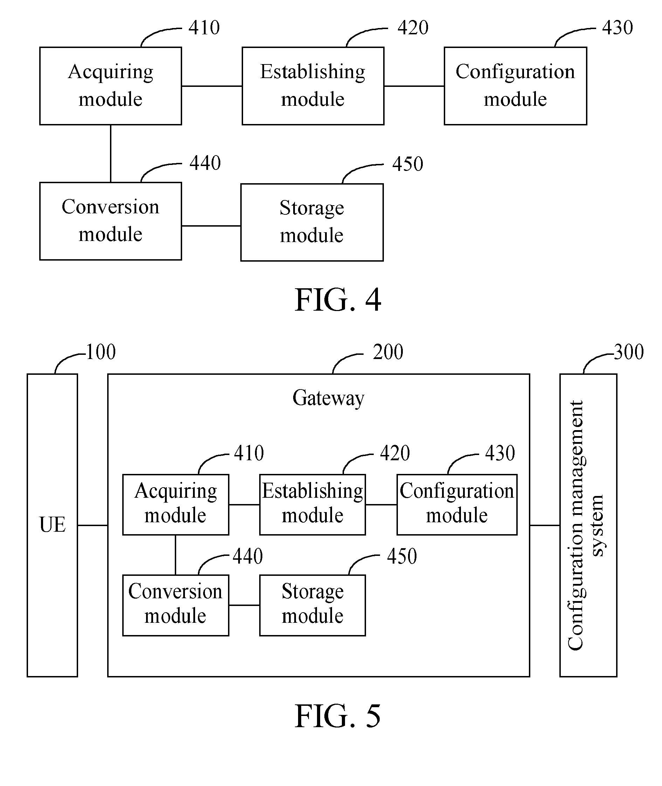

In an embodiment, the present invention further provides a gateway, to implement the method of the present invention. FIG. 4 is a schematic structural view of a gateway according to an embodiment of the present invention, which includes an acquiring module 410, an establishing module 420, and a configuration module 430.

The acquiring module 410 is adapted to acquire information of a UE.

The establishing module 420 is adapted to establish a virtual equipment according to the information of the UE acquired by the acquiring module 410.

The configuration module 430 is adapted to configure an identification of the gateway into the virtual equipment established by the establishing module 420.

The gateway further includes a conversion module 440 and a storage module 450.

The conversion module 440 is adapted to convert an identification of the UE acquired by the acquiring module 410.

The storage module 450 is adapted to store the identification of the UE and an identification of the virtual equipment converted by the conversion module 440.

The above device implements the method of the present invention, and accurately acquires the association relation between the virtual equipment and the gateway by establishing the virtual equipment according to the information of the UE acquired by the acquiring module, and configuring the identification of the gateway into a data model of the virtual equipment.

In an embodiment, the present invention further provides a system. As shown in FIG. 5, the system includes a configuration management system 300, a UE 100, and a gateway 200. The gateway 200 includes an acquiring module 410, an establishing module 420, and a configuration module 430.

The acquiring module 410 is adapted to acquire information of the UE.

The establishing module 420 is adapted to establish a virtual equipment according to the information of the UE acquired by the acquiring module 410.

The configuration module 430 is adapted to configure an identification of the gateway into the virtual equipment established by the establishing module 420.

The gateway further includes a conversion module 440 and a storage module 450.

The conversion module 440 is adapted to convert an identification of the UE acquired by the acquiring module 410.

The storage module 450 is adapted to store the identification of the UE and an identification of the virtual equipment converted by the conversion module 440.

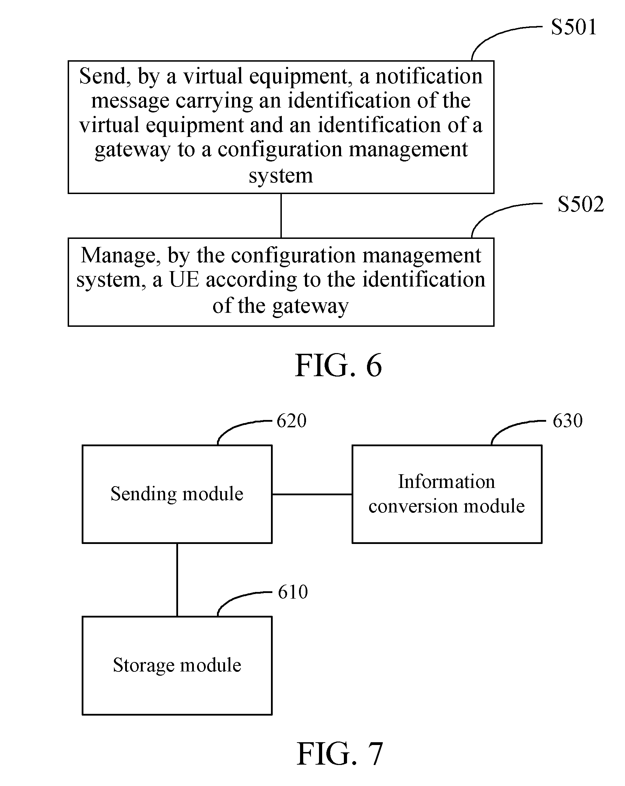

In an embodiment, the present invention further provides a method for managing a UE. As shown in FIG. 6, the method includes the following steps.

In step S501, a virtual equipment sends a notification message carrying an identification of the virtual equipment and an identification of a gateway to a configuration management system, where the virtual equipment is established by the gateway according to information of the UE, and is configured with the identification of the gateway.

In step S502, the configuration management system manages the UE according to the identification of the gateway.

In this embodiment, the virtual equipment, established by the gateway according to the information of the UE, sends the notification message carrying the identification of the virtual equipment and the identification of the gateway to the configuration management system, so that unified management of the configuration management system over the UE and the gateway is achieved.

In the above embodiment, the method may further include the following steps. The gateway acquires the information of the UE and establishes the virtual equipment according to the information of the UE. The gateway configures the identification of the gateway into the virtual equipment. In this way, the virtual equipment is established, and the identification of the gateway is configured.

In addition, the information of the UE may include an identification of the UE and functions of the UE.

The managing, by the configuration management system, the UE according to the identification of the gateway may include the following steps.

The configuration management system sends a management command over the UE according to the identification of the gateway.

The gateway forwards the management command to the UE corresponding to the virtual equipment.

In the above steps, a step that the configuration management system authenticates the received identification of the virtual equipment and the identification of the gateway may further be included.

In an embodiment, the present invention further provides an auxiliary device for managing a UE. As shown in FIG. 7, the device includes a storage module 610, a sending module 620, and an information conversion module 630. The storage module 610 is adapted to store corresponding information of the UE and an identification of a gateway, where the information of the UE includes corresponding functions of the UE and an identification of the UE. The sending module 620 is adapted to send the identification of the UE and the identification of the gateway to a configuration management system. The information conversion module 630 is adapted to receive a management command over the corresponding UE sent by the configuration management system, convert the received management command into a management command identifiable to the UE, and send the converted management command to the UE.

In this embodiment, the auxiliary device for managing the UE sends the identification of the UE and the identification of the gateway to the configuration management system, and upon receiving the management command over the UE sent by the configuration management system, converts the received management command into a management command identifiable to the UE, and sends the converted management command to the UE, so that unified management of the configuration management system over the UE and the gateway is achieved.

The above information conversion module may be divided into a receiving unit, a conversion unit, and a sending unit. The receiving unit is adapted to receive the management command over the corresponding UE sent by the configuration management system. The conversion unit is adapted to convert the received management command over the UE into the management command identifiable to the UE. The sending unit is adapted to send the converted management command identifiable to the corresponding UE.

The method and the device of the present invention record the information of the UE in the gateway, establish the virtual equipment according to the information of the UE, and configure the identification of the gateway into the virtual equipment, so that the configuration management system is enabled to acquire the connection between the UE and the gateway according to the information reported by the virtual equipment, and thus unified management over the UE and the gateway is achieved. Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in one nonvolatile storage medium (for example, a CD-ROM, a USB flash drive, or a removable hard disk) and contain several instructions used for instructing a computer equipment (for example, a personal computer, a server, or a network equipment) to perform the method according to the embodiments of the present invention.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the spirit and scope of the present invention.

## Claims

1. A method for association between an equipment and a gateway, comprising:
acquiring information of a user equipment (UE);
establishing a virtual equipment according to the information of the UE; and
configuring an identification of the gateway into the virtual equipment.

2. The method for association between the equipment and the gateway according to claim 1, wherein the information of the UE comprises an identification of the UE.

3. The method for association between the equipment and the gateway according to claim 2, wherein the acquiring the information of the UE comprises:
acquiring the information of the UE through a Universal Plug and Play (UPnP) protocol; or
acquiring the information of the UE through a Dynamic Host Configuration Protocol (DHCP); or
acquiring the information of the UE through configuration.

4. The method for association between the equipment and the gateway according to claim 2, wherein before the establishing the virtual equipment according to the information of the UE, the method further comprises:
storing the identification of the UE.

5. The method for association between the equipment and the gateway according to claim 1, wherein the establishing the virtual equipment according to the information of the UE comprises: establishing a data model of the virtual equipment according to the information of the UE.

6. The method for association between the equipment and the gateway according to claim 5, wherein the establishing the data model of the virtual equipment according to the information of the UE further comprises:
converting the identification of the UE into an identification of the virtual equipment; and
storing the identification of the virtual equipment.

7. The method for association between the equipment and the gateway according to claim 6, wherein the configuring the identification of the gateway into the virtual equipment comprises: storing the identification of the gateway in the data model of the virtual equipment. ; and

8. A gateway, comprising:
an acquiring module, adapted to acquire information of a user equipment (UE);
an establishing module, adapted to establish a virtual equipment according to the information of the UE acquired by the acquiring module; and
a configuration module, adapted to configure an identification of the gateway into the virtual equipment established by the establishing module.

9. The gateway according to claim 8, further comprising:
a conversion module, adapted to convert an identification of the UE acquired by the acquiring module into an identification of the virtual equipment; and
a storage module, adapted to store the identification of the UE and the identification of the virtual equipment converted by the conversion module.

10. A system, comprising a configuration management system, a user equipment (UE), and a gateway or , wherein the gateway comprises:
an acquiring module, adapted to acquire information of the UE;
an establishing module, adapted to establish a virtual equipment according to the information of the UE acquired by the acquiring module; and
a configuration module, adapted to configure an identification of the gateway into the virtual equipment established by the establishing module.

11. The system according to claim 10, wherein the gateway further comprises:
a conversion module, adapted to convert an identification of the UE acquired by the acquiring module into an identification of the virtual equipment; and
a storage module, adapted to store the identification of the UE and the identification of the virtual equipment converted by the conversion module.

12. A method for managing a user equipment (UE), comprising:
sending, by a virtual equipment, a notification message carrying an identification of the virtual equipment and an identification of the gateway to a configuration management system, wherein the virtual equipment is established by the gateway according to information of the UE, and is configured with the identification of the gateway; and
managing, by the configuration management system, the UE according to the identification of the gateway.

13. The method for managing the UE according to claim 12, further comprising:
acquiring, by the gateway, the information of the UE, and establishing the virtual equipment according to the information of the UE; and
configuring, by the gateway, the identification of the gateway into the virtual equipment.

14. The method for managing the UE according to claim 13, wherein the information of the UE further comprises:
an identification of the UE and functions of the UE.

15. The method for managing the UE according to claim 12, wherein the managing, by the configuration management system, the UE according to the identification of the gateway comprises:
sending, by the configuration management system, a management command over the UE according to the identification of the gateway; and
forwarding, by the gateway, the management command to the UE corresponding to the virtual equipment.

16. The method for managing the UE according to claim 15, further comprising:
authenticating, by the configuration management system, the received identification of the virtual equipment and the identification of the gateway.

17. An auxiliary device for managing a user equipment (UE), comprising:
a storage module, adapted to store corresponding information of the UE and an identification of a gateway, wherein the information of the UE comprises corresponding functions of the UE and an identification of the UE;
a sending module, adapted to send the identification of the UE and the identification of the gateway to the configuration management system; and
an information conversion module, adapted to receive a management command over the corresponding UE sent by the configuration management system, convert the received management command into a management command identifiable to the UE, and send the converted management command to the UE.

18. The auxiliary device for managing the UE according to claim 17, wherein the information conversion module comprises:
a receiving unit, adapted to receive the management command over the corresponding UE sent by the configuration management system;
a conversion unit, adapted to convert the received management command over the UE into a management command identifiable to the UE; and
a sending unit, adapted to send to the corresponding UE the converted management command identifiable to the UE.
